# EUROPÄISCHE PATENTSCHRIFT

(11) **EP 3 199 227 B1**
(45) Veröffentlichungstag und Bekanntmachung des Hinweises auf die Patenterteilung: **21.08.2019**
(21) Anmeldenummer: 17151048.0
(22) Anmeldetag: 11.01.2017
(51) Int. Cl.: B01F 7/00, F16D 1/104, F16D 3/02, F16D 3/16, B01F 15/00

(54) **MISCHROTOR, ANTRIEBSFUTTER, MISCHEINHEIT UND MISCHVORRICHTUNG ZUR HERSTELLUNG FLIESSFÄHIGER BAUSTOFFE**
MIXING ROTOR, DRIVE CHUCK, MIXING UNIT AND MIXING DEVICE FOR MANUFACTURING FREE-FLOWING BUILDING MATERIALS
ROTOR DE MALAXAGE, MANDRIN D'ENTRAÎNEMENT, UNITÉ DE MALAXAGE ET DISPOSITIF DE MALAXAGE DESTINÉ À LA FABRICATION DE MATÉRIAUX DE CONSTRUCTION FLUENTS

(30) Priorität: 26.01.2016 DE 102016101369
(43) Veröffentlichungstag der Anmeldung: 02.08.2017
(73) Patentinhaber: Knauf PFT GmbH & Co. KG, 97346 Iphofen (DE)
(72) Erfinder: Duelli, Michael, 97447 Gerolzhofen (DE)
(74) Vertreter: Schröer, Gernot H.

(56) Entgegenhaltungen:
- EP-A2- 1 918 020
- US-A- 3 606 260
- US-A1- 2002 136 086
- US-A1- 2008 223 225

## Beschreibung

Die Erfindung betrifft eine Mischeinheit sowie eine Mischvorrichtung zur Herstellung fließfähiger Baustoffmischungen, beispielsweise auf Mörtel- oder Betonbasis, insbesondere Leicht-, Kalk-, Zement-, Wärmeputz, und/oder Mörtelmischungen und dergleichen.

Aus der US 2008/0223225 A1 ist ein Mischrotor zur Durchmischung von Nahrungsmittel bekannt, wobei ein als Löffel ausgebildetes Mischelement einen Antriebsschaft mit einem abgerundeten Ende umfasst, welches zur Kopplung mit einem Drehantrieb in eine hülsenartige Vertiefung eines Drehantriebs eingesteckt werden kann.

Aus der US 2002/0136086 A1 ist eine Kupplung für einen Mischrotor eines Handmixers bekannt, welche im Kupplungsbereich eine an einer durch eine äußere Wandung gebildete Hülse eine Kopplungsschulter aufweist, deren Stirnseite in Umfangsrichtung gewellt ausgebildet ist, so dass die Kopplungsschulter mit einer komplementären Kopplungsschulter in Umfangsrichtung drehrichtig koppelbar ist.

Bekannte Mischrotoren zeigen betriebsbedingt u.a. unerwünschten Verschleiß, beispielsweise im Bereich von Antriebsschäften und dazu korrespondierenden Antriebselementen. Ferner erfordern bekannte Mischrotoren unter Umständen vergleichsweise aufwändige Herstellungsschritte, beispielsweise Schmiede- und Umformvorgänge, sowie, zumindest teilweise, die Verbindung einer Mehrzahl an Komponenten, wodurch die Herstellung des jeweiligen Mischrotors vergleichsweise aufwändig, und u.U. vergleichsweise teuer sein kann. Insoweit lassen die bekannten Lösungen für Mischrotoren insbesondere im Hinblick auf Verschleiß, Materialermüdung und Herstellungsaufwand durchaus Raum für Verbesserungen.

Ausgehend davon ist es insbesondere eine Aufgabe der zu Grunde liegenden Erfindung, eine neue bzw. alternative Mischeinheit und Mischvorrichtung zur Herstellung fließfähiger Baustoffe, insbesondere auf Mörtel- oder Beton-basis anzugeben.

Diese Aufgabe wird insbesondere gelöst durch die unabhängigen Ansprüche. Ausgestaltungen zur Lösung der Aufgabe ergeben sich insbesondere auch aus den abhängigen Ansprüchen sowie aus der nachfolgenden Beschreibung von Ausgestaltungen und Ausführungsbeispielen der Erfindung.

Die hierin beschriebenen Merkmale und Merkmalskombinationen gemäß der zu Grunde liegenden Erfindung sind nicht durch die in den Ansprüchen gewählte/n Merkmalskombination/en und die gewählten Rückbeziehungen beschränkt. Jedes Merkmal einer Anspruchskategorie auch in einer anderen Anspruchskategorie beansprucht werden. Ferner kann jedes Merkmal in den Patentansprüchen, auch unabhängig von der jeweiligen anspruchsgemäßen Rückbeziehung, beispielsweise in einer beliebigen Kombination mit einem oder mehreren anderen Merkmal(en) der Ansprüche oder der nachfolgenden Beschreibung beansprucht werden. Ferner kann jedes Merkmal, das in der nachfolgenden Beschreibung und/oder den anhängenden Zeichnungen offenbart und/oder im Zusammenhang mit den Zeichnungen beschrieben oder offenbart ist für sich, unabhängig oder losgelöst von dem Zusammenhang, in dem es steht, allein oder in jeglicher Kombination mit einem oder mehreren anderen Merkmalen, das oder die in den Ansprüchen, der Beschreibung und/oder den Zeichnungen beschrieben oder offenbart ist oder sind, beansprucht werden, insbesondere in dem Umfang, in welchem das jeweilige Merkmal zumindest einen Beitrag zur Lösung der genannten Aufgabe liefert. Insbesondere können auch jede der nachfolgend beschriebenen Ausgestaltungen bzw. jedes der beschriebenen

Ausführungsbeispiele und deren Merkmale für sich gesondert und/oder in beliebigen Kombinationen beansprucht werden.

In Ausgestaltungen kann vorgesehen sein, dass ein Mischrotor zur Mischung fließfähiger Baustoffe, basierend insbesondere auf Mörtel- oder Betongemischen, eine Durchmischungseinheit und einen mit der Durchmischungseinheit zum Zwecke der Übertragung einer Drehbewegung, beispielsweise zur Drehmomentübertragung, gekoppelten Antriebsschaft umfasst. Insbesondere kann der Mischrotor ausgebildet sein zum Einmischen von Trockenputzpartikeln in eine Flüssigkeit wie Wasser.

An einem von der Durchmischungseinheit abgewandten Ende kann der Antriebsschaft ein zur Kopplung mit einem Drehantrieb, insbesondere einem Antriebsfutter, ausgebildetes Antriebsschaftsegment aufweisen. Das Antriebsschaftsegment kann beispielsweise an einem axial-stirnseitigen Ende des Antriebsschafts ausgebildet sein.

Der Begriff "axial" soll insbesondere im Sinne von parallel in Richtung der Längsachse des Antriebsschafts oder des Mischrotors bzw. parallel in Richtung der Drehachse des Mischrotors oder Antriebsschafts verstanden werden.

Das Antriebsschaftsegment umfasst eine axial-stirnseitig gelegene, d.h. eine an einem axial-stirnseitigen, von der Durchmischungseinheit abgewandten Ende gelegene, zur Anlage an eine Gegen-Axiallagerfläche des Drehantriebs ausgebildete, gekrümmte Axiallagerfläche. Die gekrümmte Axiallagerfläche kann entsprechend einer vorgegebenen Krümmung bzw. entsprechend eines vorgegebenen Krümmungsverlaufs ausgebildet sein, wobei im Hinblick auf eine vorgegebene Krümmung bzw. einen vorgegebenen Krümmungsverlauf insbesondere auf den Zeitpunkt unmittelbar nach Herstellung des Mischrotors bzw. der Axiallagerfläche bzw. der Gegen-Axiallagerfläche abzustellen ist. Entsprechendes gilt für die Gegen-Axiallagerfläche für Ausgestaltungen nach welchen die Gegen-Axiallagerfläche gekrümmt ausgebildet ist.

Die Axiallagerfläche kann beispielsweise derart eingerichtet sein, dass diese mit der, z.B. komplementär gekrümmten, Gegen-Axiallagerfläche, bei mechanischer Kopplung von Antriebsschaft und Antriebsfutter nach Art eines Axial-Gelenklagers zusammenwirkt. Insbesondere können die Axiallagerflächen derart ausgebildet sein, dass diese einander flächig kontaktieren, und eine Art Gleitlagerung an der Kontaktstelle zwischen Antriebsfutter und Antriebsschaftsegment bereitstellen, beispielsweise derart, dass während des Betriebs auftretende Pendelbewegungen des Antriebsschafts relativ zum Antriebsfutter durch gleitgelagertes Aneinandergleiten der Axiallagerflächen ausgeglichen werden können.

Wie bereits angedeutet kann durch die gekrümmte Ausbildung der axial-stirnseitigen Fläche des Antriebsschafts des Mischrotors erreicht werden, dass auch bei Pendelbewegungen des Antriebsschafts relativ zum Antriebsfutter, welche beim rotatorischen Betrieb des Mischrotors, verursacht beispielsweise durch Biegebewegungen und dgl., auftreten können, die Axiallagerflächen flächig miteinander in Kontakt, insbesondere Gleitkontakt, sind, wodurch insbesondere der Verschleiß im Bereich des axial-stirnseitigen Endes des Antriebsschafts und/oder der Verschleiß an der korrespondierenden Gegenfläche am Antriebsfutter verringert werden kann/können. Ferner ist es bei entsprechender Ausbildung der Axiallagerflächen möglich, etwaige Pendelbewegungen im Wesentlichen vollständig aufzufangen bzw. auszugleichen, so dass Biegebeanspruchungen und eine dadurch ggf. verursachte Materialermüdung im Bereich des Antriebsschafts zumindest verringert werden können.

Die gekrümmte Axiallagerfläche und Gegen-Axiallagerfläche kann, derart hergestellt sein, dass diese zumindest unmittelbar nach der Herstellung, eine jeweils vorgegebene Krümmung, insbesondere Wölbung, aufweisen, wobei die Krümmungen vorzugsweise komplementär zueinander sind. Die vorgegebene Krümmung kann dabei bedeuten, dass eine vorgegebene Krümmungsfläche einen vorgegebenen Krümmungsradius oder einen vorgegebenen Krümmungsradiusverlauf aufweist. Insbesondere kann der Krümmungsradius der Axiallagerfläche und/oder der Gegen-Axiallagerfläche im Wesentlichen konstant sein, wobei die Krümmungsradien der beiden Axiallagerflächen betragsmäßig beispielsweise gleich sein können.

Die Krümmungen an Antriebsschaft und Antriebsfutter können insbesondere derart ausgebildet sein, dass im miteinander gekoppelten Zustand die Größe einer Kontaktfläche der Axiallagerflächen für etwaige beim Betrieb des Mischrotors auftretende Pendelbewegungen des Mischrotors relativ zum Antriebsfutter innerhalb eines vorgegebenen Winkelbereichs im Wesentlichen gleichbleibend ist. Beispielsweise können die Krümmungen komplementäre Krümmungsradien aufweisen derart, dass innerhalb des vorgegebenen bzw. erlaubten Pendel- oder (Raum-)Winkelbereichs die Axiallagerfläche des Antriebsschafts im Wesentlichen vollflächig in (Gleit-)Kontakt ist mit der Gegen-Axiallagerfläche. Dabei kann die Gegen-Axiallagerfläche beispielsweise größer sein als die Axiallagerfläche.

Die Axiallagerfläche kann beispielsweise definiert sein durch die quer zur Drehachse des Mischrotors gegebenen bzw. definierten Querschnittsabmessungen des Antriebsschafts bzw. des Antriebsschaftsegments. Die Axiallagerfläche kann beispielsweise gegeben sein durch die am Antriebsschaftsegment definierte stirnseitige Fläche bzw. Wölbung, ggf. abzüglich von Flächen betreffend Rundungen an stirnseitigen Seitenkanten des Antriebsschaftsegments, d.h. ggf. abzüglich etwaiger Flächen betreffend ballig ausgebildete stirnseitige Seitenkanten des Antriebsschaftsegments.

In Ausgestaltungen kann vorgesehen sein, dass die am axial-stirnseitigen Ende des Antriebsschaftsegments ausgebildete Axiallagerfläche eine, insbesondere konvexe oder konkave, eindimensionale Krümmung aufweist. Unter einer eindimensionalen Krümmung soll insbesondere die Krümmung bezüglich einer Ebene verstanden werden, welche parallel zur Drehachse verläuft, und die Drehachse enthält.

Benachbart zur der durch die eindimensionale Krümmung definierten Krümmungsfläche, welche über die gesamte Krümmungsfläche beispielsweise einen konstanten Krümmungsradius aufweisen kann, kann sich in Ausgestaltungen im Randbereich der Krümmungsfläche ein Krümmungsbereich mit größerer Krümmung anschließen, beispielsweise bedingt durch ballig ausgebildete Seitenkanten des Antriebsschaftsegments bzw. durch gerundet ausgebildete Seitenkanten des Antriebsschaftsegments. Eine ballige bzw. gerundete Ausbildung der Seitenkanten zusätzlich zu der axial-stirnseitigen Krümmung kann beispielsweise dazu vorgesehen sein, ein Verkanten des Antriebsschaftsegments im Antriebsfutter zu vermeiden.

In Ausgestaltungen kann vorgesehen sein, dass die Lagerfläche eine, insbesondere konvexe oder konkave, zweidimensionale Krümmung aufweist. Unter einer zweidimensionalen Krümmung soll dabei eine bezüglich zweier, sich schneidender, insbesondere senkrecht zueinander stehender, Ebenen verstanden werden, welche parallel zur Drehachse verlaufen, und von welchen zumindest eine, bevorzugt beide, die Drehachse enthält/enthalten. Die Krümmungen bezüglich der jeweiligen Ebenen können dabei gleichsinnig, d.h. synklastisch, gekrümmt sein, wobei die jeweilige Axiallagerfläche z.B. nach Art einer Kuppel geformt sein kann. Möglich ist es auch, dass die Krümmungen bezüglich der jeweiligen Ebenen gegensinnig, d.h. antiklastisch, sind, wobei die jeweilige Axiallagerfläche z.B. nach Art eines Sattels geformt sein kann.

In Ausgestaltungen kann vorgesehen sein, dass die gekrümmte Axiallagerfläche, insbesondere das stirnseitige Ende, oder die Gegen-Axiallagerfläche zumindest teilweise in Form der Oberfläche eines Zylindersegments, Kugelsegments, Kugelringsegments, oder allgemein eines Sphäroidsegments oder Sphäroidscheibensegments, beispielsweise in Form einer Kuppel, ausgebildet ist. Beispielsweise kann vorgesehen sein, dass die gekrümmte Axiallagerfläche zumindest teilweise ballig gekrümmt, d.h. ballenförmig gerundet bzw. gewölbt, ausgebildet ist. Die Gegen-Axiallagerfläche kann dabei komplementär ausgebildet sein, wobei anzumerken ist, dass in Alternativen die Gegen-Axiallagerfläche die beschriebene Krümmung aufweisen kann, wobei dann die Axiallagerfläche entsprechend invers gekrümmt ausgebildet sein kann.

Insbesondere bei den vorgenannten Ausgestaltungen kann die Gegen-Axiallagerfläche als korrespondierend ausgebildete Lagerschale oder als Lagersattel mit einer entgegengesetzten bzw. inversen Krümmung ausgebildet sein.

Kuppelartige Krümmungen können, z.B. am Antriebsschaftsegment, beispielsweise vergleichsweise einfach hergestellt werden, so dass entsprechende Verbesserungen oder Vereinfachungen beim Herstellungsprozess erreicht werden können.

In Ausgestaltungen kann vorgesehen sein, dass das Antriebsschaftsegment einen axial stirnseitig gelegenen Gelenklagerkopf umfasst, dessen Oberfläche die gekrümmte Axiallagerfläche umfasst, und welcher, insbesondere zur Ausbildung eines Axial-Gelenklagers, eingerichtet und ausgebildet ist zur Anlage an eine am Antriebsfutter ausgebildete Gelenklagerschale. Durch Ausbildung einer Art Axial-Gelenklagerung können insbesondere Pendelbewegungen des Antriebsschafts relativ zum Antriebsfutter ausgeglichen werden, wobei der Verschleiß im axial-stirnseitigen Bereich des Antriebsschafts, insbesondere in den Axiallagerflächen, verringert werden kann.

In Ausgestaltungen kann vorgesehen sein, dass zumindest das Antriebsschaftsegment in Querschnitten senkrecht zur Längsachse des Antriebsschafts, korrespondierend beispielsweise zur Längsachse des Mischrotors bzw. zur Richtung der Drehachse, zumindest abschnittsweise eine polygonale Kontur aufweist. Entsprechende Antriebsschäfte können vergleichsweise einfach hergestellt werden, beispielsweise aus einem Flachmaterial oder einem Flacherzeugnis. Ein entsprechender Antriebsschaft, insbesondere ein Grundkörper des Mischrotors, kann beispielsweise aus einem Flacherzeugnis hergestellt, insbesondere herausgeschnitten werden bzw. sein. Dabei kann die axial-stirnseitige Axiallagerfläche einhergehend mit dem Ausschneiden des Antriebsschafts oder des Grundkörpers aus einem Flacherzeugnis erfolgen. Alternativ oder zusätzlich kann die gekrümmte Axiallagerfläche durch Verwendung eines umformenden und/oder material abtragenden Schritts hergestellt oder nachbearbeitet werden.

In Ausgestaltungen kann die Durchmischungseinheit zumindest einen, bevorzugt zwei, sich vom Antriebsschaft, vorzugsweise parallel zur Drehachse erstreckende Mischarme umfassen. Ferner kann in Ausgestaltungen vorgesehen sein, dass zumindest eine an dem zumindest einen Mischarm angebrachte, insbesondere helix- oder schraubenförmige, Mischwendel vorgesehen ist. In weiteren Ausgestaltungen kann vorgesehen sein, dass zumindest einer der Mischarme zumindest ein sich quer zur Längserstreckung des Mischarms erstreckendes, zusätzliches Mischorgan, insbesondere in Form einer oder mehrerer Mischzacken, umfasst. In noch weiteren Ausgestaltungen kann an dem zumindest einen Mischarm und/oder an einem an dem zumindest einen Mischarm angebrachten Kopplungsabschnitt, ein Durchtrieb zur Übertragung einer Drehbewegung auf eine dem Mischrotor nachgeschaltete Komponente, insbesondere eine Pumpe u.ä., vorhanden sein.

Insbesondere wenn der Mischrotor aus einem Flachmaterial, sei es einstückig, oder stoffschlüssig mehrstückig, ausgebildet ist, können Mischarme, etwaige zusätzliche Komponenten wie Mischorgane, sowie die Axiallagerfläche in vergleichsweise einfacher und kostengünstiger Weise erzeugt werden, wodurch u.U. die Kosten für die Herstellung des Mischrotors reduziert werden können.

Insbesondere kann bei Verwendung flachprofilierter Materialabschnitte der Mischrotor, bzw. zumindest wesentliche Teile desselben, beispielsweise in einem einzigen Herstellungsschritt, z.B. aus einem Material vergleichswiese hoher Verschleißfestigkeit hergestellt werden, wodurch einerseits eine vergleichsweise einfache Herstellung und andererseits sowohl im Bereich des Antriebsschafts als auch im Bereich der Durchmischungseinheit vergleichsweise hohe Standzeiten erreicht werden können.

In Ausgestaltungen kann, wie bereits angedeutet, vorgesehen sein, dass zumindest ein das stirnseitige Ende des Antriebsschafts umfassender Schaftabschnitt, insbesondere des Antriebsschaftsegments, im Wesentlichen der gesamte Antriebsschaft, und/oder zumindest ein Mischarm der Durchmischungseinheit als Flachprofil gebildet ist. Beispielsweise kann/können der Antriebsschaft, zumindest ein Mischarm und/oder ein Grundkörper des Mischrotors jeweils als flachprofilierter Materialabschnitt ausgebildet sein, wobei die jeweiligen Komponenten beispielsweise im Querschnitt rechteckig ausgebildet sein können. Die genannten Komponenten können über deren Längserstreckung beispielsweise ein konstantes Profil, bzw. eine gleichbleibende Kontur und/oder Dicke aufweisen.

In Ausgestaltungen kann vorgesehen sein, dass der Antriebsschaft und zumindest ein Mischarm der Durchmischungseinheit einstückig ausgebildet ist, wobei der Antriebsschaft und zumindest ein Mischarm einstückig aus einem Halbzeug hergestellt sein können. In weiteren Ausgestaltungen kann vorgesehen sein, dass der der Antriebsschaft und zumindest ein (weiterer) Mischarm der Durchmischungseinheit durch eine stoffschlüssige Verbindung, beispielsweise eine Schweißverbindung, miteinander verbunden sind.

Eine Ausbildung des Mischrotors, insbesondere eines Grundkörpers des Mischrotors, als einstückige Einheit aus z.B. einem Flacherzeugnis, ermöglicht u.U. beispielsweise eine vergleichsweise einfache Herstellung, wobei der Grundkörper z.B. aus einem Flacherzeugnis geeigneter Dicke und Stabilität herausgeschnitten werden kann. Bei entsprechender Ausgestaltung der Grundkörpergeometrie kann dieser im Wesentlichen ohne zusätzliche umformende oder material abtragende Herstellungsschritte gefertigt werden, so dass eine vergleichsweise einfache und/oder kostengünstige Herstellung erreicht werden kann.

In Ausgestaltungen der Erfindung kann ein Antriebsfutter vorgesehen sein, welches ausgebildet ist zum rotatorischen Antrieb eines zur Mischung fließfähiger Baustoffe eingerichteten Mischrotors um eine Drehachse bzw. zur rotatorischen Kopplung zum Zwecke der Übertragung eines Drehmoments mit einem zur Mischung fließfähiger Baustoffe eingerichteten Mischrotor, wobei der Mischrotor nach einem der hierin beschriebenen Ausführungsbeispiele und Ausgestaltungen gemäß der Erfindung ausgebildet sein kann.

Der Antriebsschaft kann eine Antriebsschaftaufnahme zur kraft- und/oder formschlüssigen Aufnahme eines bzw. des Antriebsschaftsegments des Antriebsschafts des Mischrotors umfassen. Die Antriebsschaftaufnahme kann eine, beispielsweise rotationssymmetrisch zur Drehachse, bzw. Antriebsachse, ausgebebildete, in Richtung der Drehachse orientierte, gekrümmte Gegen-Axiallagerfläche, d.h. Komplementär-Axiallagerfläche aufweisen, wobei die Gegen-Axiallagerfläche ausgebildet ist zur Anlage an eine bzw. die axial-stirnseitig gelegene Axiallagerfläche eines bzw. des Antriebsschafts des Mischrotors. Wegen Einzelheiten wird zusätzlich auf die Ausführungen zur Axiallagerfläche verwiesen.

Durch eine gekrümmte Gegen-Axiallagerfläche am Antriebsfutter, insbesondere in Kombination mit einer gekrümmten Axiallagerfläche am Antriebsschaft, kann ein vergleichsweise verschleißarmer Betrieb erreicht werden, indem etwaige während des Betriebs auftretende Pendelbewegungen des Antriebsschafts relativ zum Antriebsfutter beispielsweise durch verschleißarme Gleitbewegungen der gekrümmten Axiallagerflächen relativ zueinander ausgeglichen werden können.

Wie bereits erwähnt, können in Ausgestaltungen die Axiallagerflächen betragsmäßig im Wesentlichen gleiche Krümmungen aufweisen. Insbesondere können die Axiallagerflächen, zumindest in einem möglichen Kontaktbereich, zueinander komplementäre bzw. inverse Krümmungen aufweisen.

Weitere, bereits oben beschriebene Ausgestaltungen betreffend Art der Krümmungen, Vorzeichen der Krümmungsradien, Verlauf der Krümmungsradien, Form und Wölbung der Axiallagerflächen, können als Verschleiß mindernde Maßnahmen entsprechend auf die Gegen-Axiallagerfläche des Antriebsfutters angewandt werden, selbst wenn keine entsprechende Axiallagerfläche am Mischrotor vorhanden ist.

In Ausgestaltungen kann, in Axialprojektion parallel zur Drehachse der Kombination aus Antriebsfutter und Mischrotor gesehen, die Fläche der projizierten Gegen-Axiallagerfläche größer oder kleiner oder gleich groß sein wie die Fläche der projizierten Axiallagerfläche. Beispielsweise kann die projizierte Gegen-Axiallagerfläche größer sein als die projizierte Axiallagerfläche, so dass bei Pendelbewegungen stets eine maximale Kontaktfläche zwischen den beiden Axiallagerflächen erreicht werden kann, wodurch insbesondere hohe Punktbelastungen vermieden werden können.

In Ausgestaltungen kann vorgesehen sein, dass die Antriebsschaftaufnahme des Antriebsfutters eine sich in Richtung der Drehachse erstreckende, insbesondere buchsenartige, Vertiefung, Ausnehmung oder Aussparung umfasst, in welche z.B. der Antriebsschaft eines Mischrotors einführbar ist, beispielsweise derart, dass der Antriebsschaft in der Vertiefung bezüglich einer Drehbewegung um die Drehachse formschlüssig aufgenommen werden kann.

Die Antriebsschaftaufnahme kann eine in Richtung der Drehachse orientierte Bodenfläche aufweisen, welche die gekrümmte Gegen-Axiallagerfläche umfasst. In Ausgestaltungen kann die Bodenfläche im Wesentlichen deckungsgleich sein mit der Gegen-Axiallagerfläche, d.h., dass die Gegen-Axiallagerfläche im Wesentlichen identisch mit der Bodenfläche sein kann.

In Ausgestaltungen kann vorgesehen sein, dass die Gegen-Axiallagerfläche ein- oder zweidimensional, insbesondere konkav oder und/oder konvex, gekrümmt ist. Insbesondere kann die Gegen-Axiallagerfläche komplementär bzw. invers gekrümmt zu der bzw. einer wie weiter oben beschriebenen Axiallagerfläche des Antriebsschafts ausgebildet sein, so dass Gegen-Axiallagerfläche und Axiallagerfläche beispielsweise nach Art eines gleitgelagerten KugelPfanne-Gelenks ausgebildet sind. Die Gegen-Axiallagerfläche kann beispielsweise als ein- oder zweidimensional gekrümmte Lagerschale ausgebildet sein, die Axiallagerfläche beispielsweise nach Art eines Lagerkopfs. Die Krümmungsradien der Axialflächen können im Betrag im Wesentlichen, insbesondere über im Wesentlichen die gesamten Axiallagerflächen hinweg, gleich groß sein.

In Ausgestaltungen kann die Vertiefung einen polygonalen, insbesondere rechteckigen Querschnitt aufweisen, welcher insbesondere derart ausgebildet sein kann, dass dieser zur Aufnahme eines in Flachprofil ausgebildeten Antriebsschafts bzw. eines in Flachprofil ausgebildeten Antriebsschaftsegments geeignet ist. Beispielsweise kann die Vertiefung in Querschnitten senkrecht zur Drehachse eine Innenkontur aufweisen, welche komplementär ist zur Kontur des Antriebsschafts bzw. Antriebsschaftsegments in Querschnitten senkrecht zur Drehachse, so dass der Antriebsschaft bzw. das Antriebsschaftsegment in Umfangsrichtung bezüglich der Drehachse formschlüssig in der Vertiefung aufgenommen werden kann, bzw. in die Vertiefung eingesteckt werden kann.

Im Falle eines in Flachprofil ausgebildeten Antriebsschafts, bzw. Antriebsschaftsegments, kann die Vertiefung in Querschnitten senkrecht zur Drehachse beispielsweise eine rechteckförmige Kontur, und in Richtung der Drehachse gesehen beispielsweise eine rechteckzylinderförmige Form aufweisen, so dass das Antriebsschaftsegment in die Vertiefung eingesteckt werden kann, und so eine bezüglich Drehung zwischen Vertiefung und Antriebsschaftsegment formschlüssig ausgebildete Verbindung hergestellt werden kann.

In Ausgestaltungen kann vorgesehen sein, das das Antriebsfutter des Weiteren einen Einführtrichter umfasst, welcher eine sich in Richtung der Drehachse erstreckende, und optional rotationssymmetrisch zur Drehachse ausgebildete, Trichterwandung aufweisen kann. In Ausgestaltungen kann sich die Trichterwandung, bzw. der Einführtrichter beispielsweise in Richtung der Drehachse betrachtet konisch verjüngend zur Vertiefung hin erstrecken, wodurch insbesondere das Einführen des Antriebsschaftsegments in die Vertiefung vereinfacht werden kann.

In weiteren Ausgestaltungen kann die Trichterwandung unmittelbar anschließend an einer Eintrittsöffnung der Vertiefung ausgebildet sein. Mithin kann durch die aus Einführtrichter und Vertiefung gebildete Einheit als eine glockenartige Struktur ausgebildet sein. Seitenwände der Vertiefung können parallel oder konisch zur Drehachse verlaufen, wobei es insbesondere bei polygonalem Querschnitt der Vertiefung auch möglich ist, dass eine oder mehrere der Seitenwände parallel zur Drehachse verlaufen während andere Seitenwände konisch bezüglich der Drehachse ausgebildet sind.

In Ausgestaltungen kann die Vertiefung in dessen Kontur derart ausgebildet sein, dass die Querschnittsfläche der Vertiefung quer zur Drehachse größer ist als eine, nach Einsetzen des Antriebsschaftsegments in die Vertiefung korrespondierende Querschnittsfläche des Antriebsschaftsegments, so dass der Antriebsschaft im Wesentlichen ohne Kontaktwechselwirkung zwischen Außenflächen des Antriebsschaftsegments und Innenwänden der Vertiefung Pendelbewegungen innerhalb eines vorgegebenen Raumwinkels ausführen kann, so dass entsprechende Biegebeanspruchungen vermieden werden können.

In Ausgestaltungen kann die Vertiefung so ausgebildet sein, dass im eingesetzten Zustand zwischen Innenwänden der Vertiefung und Außenwänden des Antriebsschaftsegments ein vorgegebenes Spiel, insbesondere Mindest-Spiel, vorhanden ist, welches Pendelbewegungen innerhalb eines vorgegebenen (Raum-)Winkels ermöglicht. Als Bezugspunkt für den (Raum-)Winkel kann beispielsweise der Durchstoßpunkt der Drehachse durch die Gegen-Axiallagerfläche verwendet werden.

In Ausgestaltungen der Erfindung kann eine Mischeinheit zur Mischung fließfähiger Baustoffe, basierend insbesondere auf Mörtel- oder Betongemischen, vorgesehen sein. Die Mischeinheit kann einen Mischrotor nach einem der hierin beschriebenen erfindungsgemäßen Ausgestaltungen umfassen, und/oder kann ein Antriebsfutter nach einem der hierin beschriebenen erfindungsgemäßen Ausgestaltungen umfassen.

Die Mischeinheit kann so eingerichtet sein, dass die Antriebsschaftaufnahme form- und/oder kraftschlüssig mit dem Antriebsschaftsegment des Mischrotors gekoppelt ist derart, dass die Lagerfläche und die Komplementärlagerfläche in einem, insbesondere ein- oder zweidimensional, beispielsweise als Linien- bzw. Flächenkontakt, ausgebildeten, Kontaktbereich miteinander in Kontakt sind.

Das Antriebsfutter der Mischeinheit kann derart ausgebildet sein, dass zwischen Antriebsschaftaufnahme und Antriebsschaftsegment ein bezüglich der Drehachse gemessenes radiales Spiel vorhanden ist. Wie bereits erwähnt kann auf diese Weise vermieden werden, dass der Antriebsschaft durch betriebsbedingte Pendelbewegungen mit Biegebeanspruchungen beaufschlagt wird, die lediglich aus der Kopplung zwischen Antriebsschaftsegment und Vertiefung resultieren. Vielmehr kann ein gewisses radiales Spiel dazu führen, dass der Antriebsschaft im Wesentlichen biegebeanspruchungsfreie Pendelbewegungen innerhalb eines jeweils durch das Spiel gegebenen (Raum-)Winkel oder (Raum-)Winkelbereich ausführen kann, so dass beispielsweise die Materialbeanspruchung insgesamt verringert, und/oder die Standzeit des Antriebsschafts verbessert werden kann/können.

In Ausgestaltungen kann vorgesehen sein, dass zumindest innerhalb des Kontaktbereichs, zwischen Axiallagerfläche und Gegen-Axiallagerfläche, der Beträge der Krümmungsradien der Axiallagerfläche und der Gegen-Axiallagerfläche im Wesentlichen gleich groß sind, d.h. dass die Krümmungen betragsmäßig gleich sind.

Zur Vermeidung von zu hohen Punktbelastungen kann es von Vorteil sein, wenn die Kontaktfläche im Wesentlichen die gesamte Axiallagerfläche umfasst, wobei insbesondere in diesem Fall die Axiallagerfläche und die Gegen-Axiallagerfläche entgegengesetzt zueinander, d.h. invers zueinander, gekrümmt sein können. Wie bereits erwähnt, kann die Gegen-Axiallagerfläche als konkav gekrümmte Lagerschale ausgebildet sein, und die Axiallagerfläche kann als konvex gekrümmte Kuppel bzw. als konvex gekrümmter Lagerkopf ausgebildet sein.

In Ausgestaltungen kann vorgesehen sein, dass eine Kontaktfläche des Kontaktbereichs im Wesentlichen dem Querschnitt des Antriebsschafts entspricht. Beispielsweise können die Axiallagerfläche und die Gegen-Axiallagerfläche derart ausgebildet sein, dass in Projektion parallel zur Drehachse gesehen, die projizierte Kontaktfläche im Wesentlichen gleich groß ist wie der projizierte Querschnitt des Antriebsschafts bzw. des Antriebsschaftsegments. Die Formulierung "im Wesentlichen gleich groß" soll dabei insbesondere bedeuten, dass die Kontaktfläche und die Querschnittsfläche abgesehen von etwaigen Flächen mit z.B. größerer Krümmung an ballig ausgebildeten Seitenkanten einander entsprechen. Mit entsprechenden Kontaktflächen können hohe punktuelle Belastungen der Axiallagerflächen und/oder mechanische Abnutzungen durch Verschleiß verringert werden.

In Ausgestaltungen der Erfindung kann eine Mischvorrichtung vorgesehen sein, welche ausgebildet ist zur Mischung fließfähiger Baustoffe, basierend insbesondere auf Mörtel- oder Betongemischen. Die Mischvorrichtung kann ein Antriebsfutter nach einer der hierin beschriebenen erfindungsgemäßen Ausgestaltungen, und/oder einen Mischrotor nach einer der hierin beschriebenen erfindungsgemäßen Ausgestaltungen, und/oder eine Mischeinheit nach einer der hierin beschriebenen erfindungsgemäßen Ausgestaltungen umfassen, und des Weiteren eine Antriebseinheit, z.B. einen Antriebsmotor, welcher zum

Zwecke der Übertragung einer Drehbewegung mit dem Antriebsfutter, dem Mischrotor bzw. der Mischeinheit gekoppelt bzw. koppelbar ist. Wegen Vorteilen und vorteilhaften Wirkungen wird auf die obigen Ausführungen zum Mischrotor, zum Antriebsfutter, sowie zur Mischeinheit verwiesen, die entsprechend gelten.

Nach einer weiteren Ausgestaltung kann vorgesehen sein die Verwendung eines Axial-Gelenklagers, mit zumindest einer gekrümmten Axiallagerfläche, zur axialen Lagerung eines Antriebsschafts eines Mischrotors, insbesondere nach einem der hierin beschriebenen erfindungsgemäßen Ausgestaltungen, in einer Antriebsschaftaufnahme eines, insbesondere nach einem der hierin beschriebenen, erfindungsgemäßen Ausgestaltungen ausgebildeten, Antriebsfutters einer Mischvorrichtung, insbesondere nach einem der hierin vorgeschlagenen erfindungsgemäßen Ausgestaltungen, zur Mischung fließfähiger Baustoffe, basierend insbesondere auf Mörtel- oder Betongemischen.

Insgesamt ergibt sich aus der obigen Beschreibung von Ausgestaltungen der Erfindung, dass der Mischrotor, das Antriebsfutter, die Mischeinheit bzw. die Mischvorrichtung die zu Grunde liegende Aufgabe lösen, wobei beispielsweise eine vergleichsweise einfache Herstellung und/oder eine gegenüber mechanischem Verschleiß vergleichsweise robuste Ausführung erreicht werden kann/können.

Ausgestaltungen der Erfindung werden anhand der nachfolgenden Figuren näher beschrieben. Es zeigen:
- FIG. 1: eine perspektivische Darstellung eines Mischrotors eines ersten Ausführungsbeispiels;
- FIG. 2: eine Schnittdarstellung des mit einem Antriebsfutter eines Drehantriebs gekoppelten Mischrotors;
- FIG. 3: ein Detail der Schnittdarstellung der FIG. 2;
- FIG. 4: ein Antriebsfutter gemäß der Schnittdarstellung der FIG. 3;
- FIG. 5: eine perspektivische Darstellung einer ersten Ausgestaltung einer Axiallagerfläche;
- FIG. 6: eine perspektivische Darstellung einer zweiten Ausgestaltung einer Axiallagerfläche;
- FIG. 7: eine Seitenansicht des Mischrotors nach FIG. 1;
- FIG. 8: eine Vorderansicht des Mischrotors;
- FIG. 9: eine perspektivische Darstellung eines Mischrotors eines zweiten Ausführungsbeispiels;
- FIG. 10: eine Vorderansicht des Mischrotors des zweiten Ausführungsbeispiels;
- FIG. 11: eine Seitenansicht des Mischrotors des zweiten Ausführungsbeispiels; und
- FIG. 12: eine Vorderansicht eines Mischrotors eines dritten Ausführungsbeispiels.

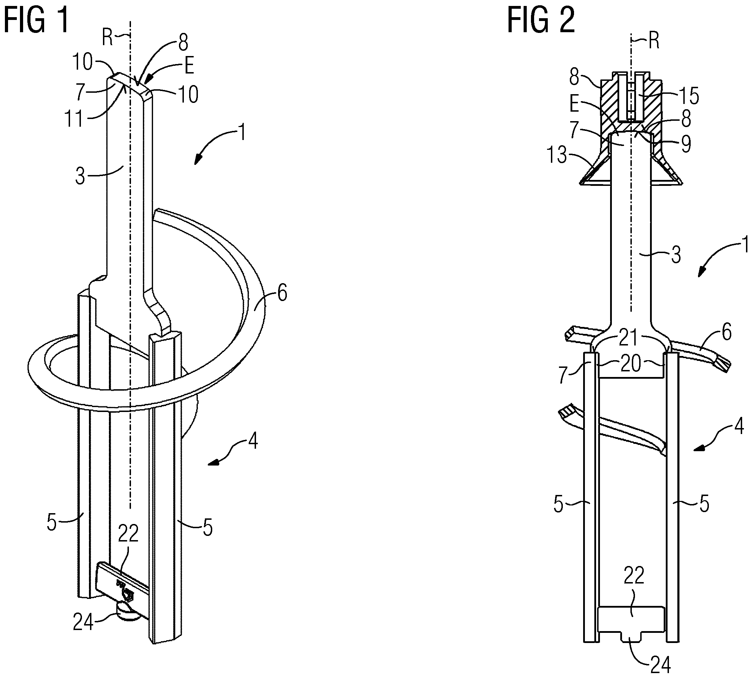

Fig. 1 zeigt eine perspektivische Darstellung eines Mischrotors 1 eines ersten Ausführungsbeispiels, und FIG. 2 zeigt eine Schnittdarstellung des mit einem Antriebsfutter 2 (cf. FIG. 2) eines Drehantriebs gekoppelten Mischrotors 1.

Der Mischrotor 1 ist ausgebildet und eingerichtet zur Herstellung bzw. Mischung fließfähiger Baustoffe, basierend beispielsweise auf Mörtel- oder Betongemischen, wobei der Mischrotor durch den Drehantrieb um eine Drehachse R rotierbar bzw. drehbar ist. Bei dem fließfähigen Baustoff kann es sich beispielsweise um Leicht-, Kalk-, Zement-, Wärmeputz, Mörtelmischungen und/oder ähnliche Baustoffe oder Baustoffmischungen handeln.

Der Mischrotor 1 umfasst einen zur mechanischen Kopplung mit einem dem Antriebsfutter 2 ausgebildeten Antriebsschaft 3 und ferner eine mit dem Antriebsschaft 3 verbindungstechnisch gekoppelte Durchmischungseinheit 4 mit zumindest einem Mischarm 5 oder einem Mischschenkel.

Der Mischrotor 1 ist derart ausgebildet, dass der Antriebsschaft 3 im Wesentlichen über dessen bzw. deren gesamte Längserstreckung, aus einem flachprofilierten, im Beispiel der FIG. 1 rechteckprofilierten, Materialabschnitt, z.B. aus Flachmaterial oder einem Flacherzeugnis, gebildet bzw. gefertigt ist. Jedoch sind auch andere Querschnittsformen denkbar, wie beispielsweise runde, ovale oder anderweitig polygonale Querschnitte.

Beispielsweise kann der flachprofilierte Materialabschnitt aus einem flachprofilierten, insbesondere platten- oder tafelförmigen Halbzeug hergestellt, insbesondere herausgeschnitten sein. Insbesondere kann ein Grundkörper des Mischrotors 1, umfassend z.B. den Antriebsschaft 2, aus einem Flachmaterial oder Flacherzeugnis, beispielsweise einem Blech, einer Blechtafel und dgl., hergestellt oder gefertigt sein, beispielsweise mittels Trenn- oder Schneidverfahren.

Der Antriebsschaft 3 des Mischrotors 1 ist, wie bereits erwähnt, ausgebildet zur Übertragung einer durch das Antriebsfutter 2 des Drehantriebs erzeugten Drehbewegung bzw. eines korrespondierenden Drehmoments, auf die Durchmischungseinheit 4 und die die damit gekoppelten Mischarme 5 sowie auf eine ggf. ebenfalls vorhandene Mischwendel 6.

Der Antriebsschaft 3 weist an einem von der Durchmischungseinheit 4 abgewandten Ende E ein zur Kopplung mit dem Antriebsfutter 2 ausgebildetes Antriebsschaftsegment 7 auf. Das Antriebsschaftsegment 7 umfasst eine bezüglich der Drehachse R, welche im Beispiel der Figuren der Längsachse des Mischrotors 1 entspricht, axial-stirnseitig gelegene, gekrümmte Axiallagerfläche 8.

Die gekrümmte Axiallagerfläche 8, welche im Folgenden kurz Axiallagerfläche 8 genannt wird, ist so ausgebildet, dass diese mit einer gekrümmten Gegen-Axiallagerfläche 9 des Antriebsfutters 2 in, insbesondere flächige, Anlage gebracht werden kann.

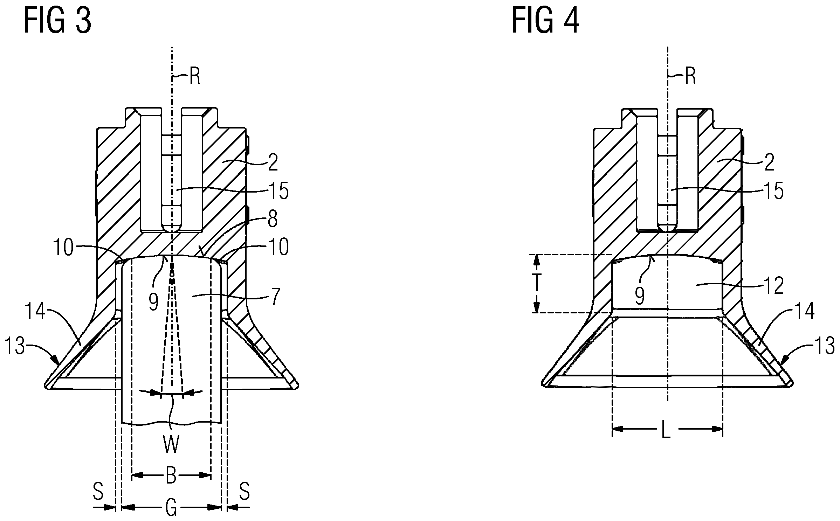

Die gekrümmte Gegen-Axiallagerfläche 9 wird im Folgenden kurz mit Gegen-Axiallagerfläche 9 bezeichnet. Details betreffend das Antriebsfutter 2 mit Antriebsschaftsegment 7 bzw. das Antriebsfutter 2 als solches, sowie die Axiallagerflächen 8 und 9 sind insbesondere in den Detaildarstellungen der FIG. 3 und FIG. 4 ersichtlich.

Beim Ausführungsbeispiel der FIG. 3 und FIG. 4 ist die Axiallagerfläche 8 des Antriebsschaftsegments 7 konvex gewölbt und weist eine, insbesondere vorgegebene, konvexe Krümmung auf, und die Gegen-Axiallagerfläche 9 des Antriebsfutters 2 weist eine, insbesondere vorgegebene, komplementäre bzw. inverse konkave Krümmung auf.

Kurze Seitenkanten am axial-stirnseitigen Ende des Antriebsschafts 3 sind im Beispiel der FIG. 1 bis 3 jeweils mit einer ballig ausgebildeten Abrundung 10 versehen, welche eine größere Krümmung aufweisen als die der Axiallagerfläche 8.

Die gekrümmte Axiallagerfläche 8 erstreckt sich in einer Richtung parallel zur langen Seitenkante 11 des Antriebsschaftsegments 7 über eine Breite B (cf. FIG. 3), die etwas kleiner ist als die Gesamtbreite G des Antriebsschaftsegments 7 parallel zur langen Seitenkante 11. Im Hinblick auf die Gesamtbreite G erstreckt sich die Axiallagerfläche 8 damit im Wesentlichen über die gesamte Breite des axial-stirnseitigen Endes des Antriebsschaftsegments 7, wobei die Krümmung der Axiallagerfläche 8 über die Breite B hinweg im Wesentlichen konstant ist.

Die Gegen-Axiallagerfläche 9 ist, wie aus FIG. 2 bis FIG. 4 ersichtlich ist, an einer Bodenfläche einer Vertiefung 12 des Antriebsschafts 3 ausgebildet, wobei die Gegen-Axiallagerfläche 9 im vorliegenden Beispiel durch die Bodenfläche ausgebildet ist, und sich über die gesamte Längsausdehnung L (cf. FIG. 4) der Vertiefung 12 erstreckt.

Die Vertiefung 12 ist im vorliegenden Beispiel als eine Ausnehmung, insbesondere sacklochartige Ausnehmung, ausgebildet, und weist senkrecht zur Drehachse R betrachtet eine zu korrespondierenden Querschnitten des Antriebsschaftsegments 7 komplementäre, rechteckige Kontur auf. Die Abmessungen der Vertiefung 12 quer zur Drehachse R, sprich die Längsausdehnung L und ggf. die senkrecht demgegenüber gemessene Breitenausdehnung, sind etwas größer als die korrespondierenden Längen- und Breitenabmessungen des Antriebsschafts 7, so dass im eingesetzten Zustand, d.h. wenn das Antriebsschaftsegment 7 in die Vertiefung 12 eingesetzt ist, ein Spiel S (cf. FIG. 3) zwischen Innenwandung der Vertiefung 12 und Außenwandung des Antriebsschaftsegments 7 besteht.

Die wie im vorliegenden Ausführungsbeispiel vorgesehenen Krümmungen der Axiallagerflächen 8 und 9, und das durch das Übermaß der Vertiefung 12 vorhandene Spiel S machen es möglich, dass das Antriebsschaftsegment 7 bzw. der Antriebsschaft 3 innerhalb eines gegebenen (Raum-)Winkelbereichs W Pendelbewegungen ausführen kann.

Insbesondere durch die vorgesehenen gekrümmten Axiallagerflächen 8 und 9 kann der Verschleiß am axial-stirnseitigen Ende E des Antriebsschaftsegments 7 verringert werden, insbesondere dadurch dass die tribologischen Eigenschaften der Bodenfläche der Vertiefung 12 und des axial-stirnseitigen Endes E des Antriebsschafts optimiert und aneinander angepasst sind.

Insbesondere kann durch die gekrümmte Ausbildung des/der Axiallagerfläche(n) erreicht werden, dass die Axiallagerflächen 8 und/oder 9 nach Art eines Gleitlagers wirken, so dass insbesondere mechanischer Verschleiß im stirnseitig kantennahen Bereich des Antriebsschaftsegments 7 verringert werden kann.

Eine Verschleißminderung kann auch erreicht werden, dass Axiallagerflächen 8 und 9, beispielsweise über die gesamte Breite B des Antriebsschaftsegments 7 aneinander anliegen, so dass punktuelle Belastungen und punktuelle Reibbeanspruchungen bei auftretenden Pendelbewegungen verringert werden können. Entsprechendes gilt für die Ausdehnung der Axiallagerflächen 8 und 9 senkrecht zur Schnittachse der FIG. 3 und 4.

Die genannten Pendelbewegungen können beispielsweise beim rotatorischen Betrieb des Mischrotors um die Drehachse R auftreten, wenn der Mischrotor 1 in einer Mischkammer zur Mischung einer Baustoffmischung betrieben wird.

Die Vertiefung 12 weist in den gezeigten Ausführungsbeispielen parallel zur Drehachse R eine mittlere Tiefe T auf, die derart gewählt ist, dass das Antriebsschaftsegment 7 sicher aufgenommen werden kann, und dass die jeweils auftretenden Drehmomente beim mischenden Betrieb des Mischrotors 1 sicher aufgenommen und übertragen werden können.

Wie aus FIG. 3 und FIG. 4 ersichtlich ist, kann das Antriebsfutter 2 des Weiteren einen Einführtrichter 13 umfassen, mit einer sich parallel zur Drehachse R erstreckenden, und optional rotationssymmetrisch zur Drehachse R ausgebildeten, Trichterwandung 14. Die Trichterwandung 14 ist im vorliegenden Beispiel zur Vertiefung 12 hin konisch verjüngend ausgebildet, und mündet unmittelbar in die Eintrittsöffnung der Vertiefung 12. Der Einführtrichter 13 bzw. die Trichterwandung 14 ermöglichen insbesondere ein vereinfachtes Einführen des Antriebsschaftsegments 7 in die Vertiefung 12.

Bei Kopplung des Antriebsschaftsegments 7 an das Antriebsfutter, in einer Konfiguration nach welcher das Antriebsschaftsegment 7 in die Vertiefung 12 eingeführt ist, sind Vertiefung 12 und Antriebsschaftsegment 7 bezüglich einer rotatorischen Bewegung um die Drehachse R formschlüssig miteinander gekoppelt, so dass durch rotatorischen Antrieb des Antriebsfutters 2 eine Drehbewegung und ein Drehmoment auf die Mischeinheit 4 übertragen werden kann.

Das Antriebsfutter 2 beispielsweise in der Ausbildung nach FIG. 3 und 4 weist noch weitere Kopplungselemente 15 auf, welche beispielsweise dazu ausgebildet sein können, das Antriebsfutter 2 mit einem (nicht gezeigten) Drehantrieb oder einer entsprechenden Antriebswelle zu koppeln.

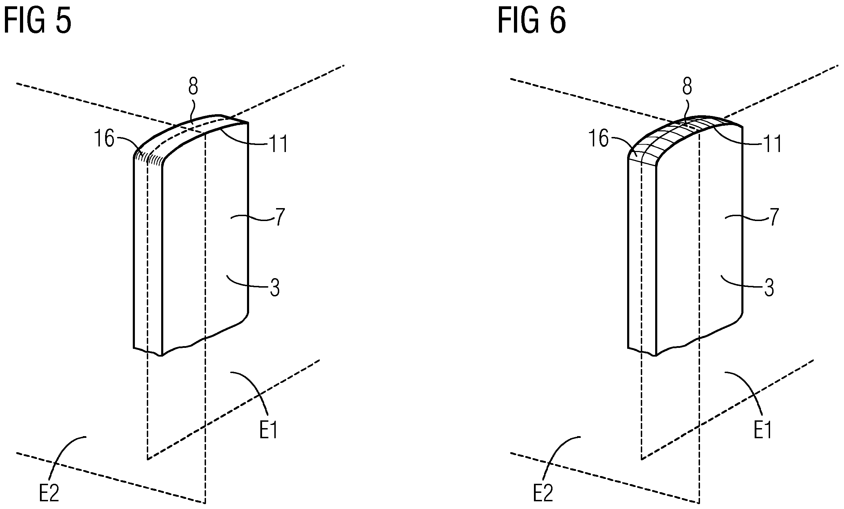

FIG. 5 und FIG. 6 zeigen perspektivische Darstellungen einer ersten und zweiten Ausgestaltung einer Axiallagerfläche 8.

Die Axiallagerfläche 8 der Ausgestaltung nach FIG. 5 weist eine, insbesondere kontinuierliche, eindimensionale Krümmung auf, was bedeuten soll, dass die Axiallagerfläche 8 bezüglich lediglich einer Ebene gekrümmt ist.

Im Beispiel der FIG. 5 ist die Axiallagerfläche 8 in einer parallel zur langen Seitenkante 11 des Antriebsschaftsegments 7 verlaufenden ersten Mittelebene E1 gekrümmt und weist bezüglich dieser eine vorgegebene Krümmung auf.

Bezüglich einer senkrecht zur ersten Mittelebene E1 und parallel zur kurzen Seitenkante 16 verlaufenden zweiten Mittelebene E2 ist die Axiallagerfläche 8 im vorliegenden Beispiel nicht, bzw. im Wesentlichen nicht, gekrümmt. Seitenkanten, wie beispielsweise die kurzen Seitenkanten 16 der FIG. 5, können ballig gekrümmt ausgebildet sein, beispielsweise mit einer Krümmung die größer ist als die der Axiallagerfläche 8.

Die Axiallagerfläche 8 nach FIG. 5 weist die Form eines Mantelabschnitts eines Zylinderscheibensegments auf, oder mit anderen Worten, das axial-stirnseitige Ende E des Antriebsschaftsegments 7 ist in Form eines Zylinderscheibensegments ausgebildet, wobei die Zylinderachse parallel zur kurzen Seitenkante 16 verläuft. Eine derartige Axiallagerfläche lässt sich vergleichsweise einfach herstellen, indem beispielsweise das axial-stirnseitige Ende E mit der entsprechenden Krümmung bzw. Wölbung aus einem Flacherzeugnis herausgeschnitten wird.

Die Gegen-Axiallagerfläche 9 kann im Beispiel der FIG. 5 korrespondierend als eindimensionale Lagerschale ausgebildet sein, mit einer komplementär zur Krümmung der Axiallagerfläche 8 ausgebildeten Krümmung.

Die Axiallagerfläche 8 der Ausgestaltung nach FIG. 6 weist eine, zweidimensionale Krümmung auf, was bedeuten soll, dass die Axiallagerfläche 8 bezüglich zweier Ebenen gekrümmt ist.

Im Beispiel der FIG. 6 ist die Axiallagerfläche 8 in der parallel zur langen Seitenkante 11 verlaufenden ersten Mittelebene E1 gekrümmt und weist bezüglich dieser eine vorgegebene Krümmung auf. Ferner ist die Axiallagerfläche 8 bezüglich der senkrecht zur ersten Mittelebene E1 und parallel zur kurzen Seitenkante 16 verlaufenden zweiten Mittelebene E2 ebenfalls gekrümmt, wobei die Krümmung bezüglich der zweiten Mittelebene E2 als kontinuierliche bzw. konstante Krümmung ausgebildet sein kann.

Die Axiallagerfläche 8 nach FIG. 6 weist die Form eines Mantelabschnitts eines Sphäroidscheibensegments auf, oder mit anderen Worten, das axial-stirnseitige Ende E des Antriebsschaftsegments 7 ist in Form eines Sphäroidscheibensegments ausgebildet, beispielsweise mit jeweils senkrecht zueinander verlaufenden Hauptkrümmungen.

Eine Axiallagerfläche 8 nach FIG. 6 kann hergestellt werden, indem beispielsweise das axial-stirnseitige Ende E mit der entsprechenden Krümmung der ersten Mittelebene E1 aus einem Flacherzeugnis herausgeschnitten wird, und das so entstandene axial-stirnseitige Ende E weiter mit einem umformenden oder Material abtragenden Schritt zur Herstellung der Krümmung der zweiten Mittelebene E2 bearbeitet wird.

Sämtliche Krümmungen, einschließlich etwaiger balliger Abrundungen an den Seitenkanten, können alternativ durch umformende und/oder Material abtragende Herstellungsverfahren erzeugt sein bzw. werden. Bei Verwendung einer zweidimensional gekrümmten Axiallagerfläche 8 können Pendelbewegungen in zwei Dimensionen ausgeglichen werden.

Die Gegen-Axiallagerfläche 9 zur Axiallagerfläche 8 der FIG. 6 kann entsprechend als zweidimensional gekrümmte Lagerschale mit einer komplementären bzw. inversen Krümmung ausgebildet sein, so dass die Axiallagerflächen 8 und 9 flächig, insbesondere im Wesentlichen vollflächig, als Gleitlagerflächen aneinander anliegen können.

Andere Formen von Axiallagerflächen 8 sind denkbar, wie beispielsweise ein- oder zweidimensional gekrümmte Lagerschalen oder Sattelflächen, wobei die jeweiligen Gegen-Axiallagerflächen mit komplementären Krümmungen umgesetzt sein können. Jeweils geeignete Paarungen von Krümmungen können beispielsweise in Abhängigkeit der jeweils zu erwartenden, in Richtung der Drehachse wirkenden Kräfte bzw. Normalkräfte bzw. der jeweils zu erwartenden Pendelbewegungen des Antriebsschafts 3 gewählt werden.

So ist es im Allgemeinen möglich, dass die Axiallagerfläche 8 bzw. die Gegen-Axiallagerfläche 9 eine, insbesondere konvexe und/oder konkave, eindimensionale Krümmung aufweist, oder dass die Axiallagerfläche 8 bzw. die Gegen-Axiallagerfläche 9 eine, insbesondere konvexe und/oder konkave, zweidimensionale Krümmung aufweist.

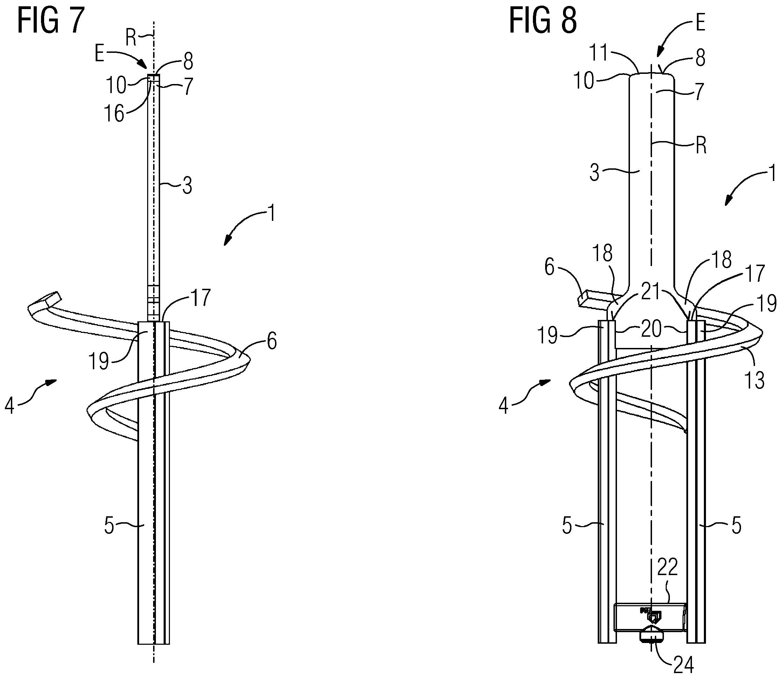

Weitere Ausführungsbeispiele des Mischrotors mit Merkmalen, welche insbesondere unabhängig beansprucht werden können, werden nachfolgend anhand der FIG. 7 bis FIG. 12 näher beschrieben.

FIG. 7 zeigt eine Seitenansicht, und FIG. 8 eine Draufsicht des Mischrotors 1 der FIG. 1.

Der Mischrotor 1 ist, wie bereits angedeutet, ausgebildet und eingerichtet zur Durchmischung bzw. Mischung von Baustoffen, insbesondere fließfähiger Baustoffe, basierend beispielsweise auf Mörtel- oder Beton-Gemischen wie z.B. Leicht-, Kalk-, Zement-, Wärmeputz, und/oder Mörtelmischungen und dergleichen. Insbesondere ist der Mischrotor 1 in Konstruktion und/oder Geometrie ausgelegt für die bei solchen Baustoffgemischen auftretenden Viskosität, und ist angepasst an die bei der Durchmischung solcher Baustoffmischungen vorherrschende Rheologie.

Die Mischeinheit 4 umfasst im vorliegenden Beispiel zwei am Antriebsschaft 3 angebrachte Mischarme 5, die sich parallel zueinander erstrecken, und symmetrisch bezüglich der Drehachse R korrespondierend zur Längsachse des Mischrotors 1 angeordnet sind.

Die Mischarme 5 können wie in den gezeigten Ausführungsbeispielen stabförmig bzw. stabartig ausgebildet sein, und können beispielsweise einen polygonen Querschnitt aufweisen, beispielsweise in Form eines, wie in den Figuren 1 und 2, und FIG. 8 und 9 gezeigten Keilprofils.

Wie den Figuren entnommen werden kann, kann der Antriebsschaft 3, insbesondere zumindest das Antriebsschaftsegment 7, aus einem flachprofilierten Materialabschnitt gebildet bzw. hergestellt sein. Der Antriebsschaft 3 bzw. das Antriebsschaftsegment 7, kann beispielsweise unmittelbar aus einem flachprofilierten Halbzeug, wie beispielsweise einer Stahl- oder Blechplatte hergestellt, z.B. herausgeschnitten oder herausgetrennt, sein. Insbesondere kann der Antriebsschaft 3 in dessen Endform aus einem flachprofilierten Material hergestellt, z.B. herausgeschnitten oder herausgetrennt, werden, wobei zur Herstellung des Grundkörpers des Antriebsschafts 3 im Wesentlichen keine materialumformenden Herstellungsschritte erforderlich sind, was bedeutet, dass zumindest der Grundkörper, bei geeigneter Wahl der Krümmung auch die Endform, des Antriebsschafts 3 im Wesentlichen ohne materialumformende Herstellungsschritte erzeugt werden kann.

Unter dem Begriff "Flachprofil" soll im Rahmen der zu Grunde liegenden Erfindung insbesondere verstanden werden, dass die Dicke des jeweiligen Materials kleiner, insbesondere deutlich kleiner, ist als die senkrecht zur Dicke gemessene Breite des Materials. Diese Eigenschaften betreffend Dicke und Breite sind insbesondere bei platten- oder blechförmigen Halbzeugen zur Herstellung des Antriebsschafts gegeben. Davon abgesehen sind die Merkmale betreffend Dicke und Breite in Sinne eines Flachprofils auch bei dem in den Figuren gezeigten Antriebsschaft 3 erfüllt, denn die längs der langen Seitenkante 11 des Antriebsschafts 3 gemessen Breite ist größer, insbesondere deutlich größer, als die längs der kurzen Seitenkante 16 des Antriebsschafts 3 gemessene Dicke.

Der flachprofilierte Materialabschnitt, insbesondere der Antriebsschaft 3 bzw. das Antriebsschaftsegment 7 ist über dessen gesamte Erstreckung in Richtung der Drehachse R, d.h. im Wesentlichen über dessen gesamte axiale Erstreckung, als Rechteckprofil ausgebildet bzw. weist über dessen gesamte axiale Erstreckung durchwegs einen rechteckförmigen Querschnitt mit konstanter Dicke auf. Das zeigt insbesondere, dass zumindest der Grundkörper, ggf. einschließlich die Krümmung des Antriebsschafts 3 aus einem Flachmaterial gefertigt werden kann, wodurch insbesondere ein Produktionsvorteil z.B. hinsichtlich Kosten, Zeit und/oder Materialeinsatz erreicht werden kann.

Die im gezeigten Ausführungsbeispiel der Figuren paarweise vorgesehenen Mischarme 5 sind in einem jeweiligen Fügebereich 17 mit dem Antriebsschaft 3 stoffschlüssig, insbesondere durch Schweißen, verbunden.

Im Fügebereich 17 weist der Antriebsschaft 3 beiderseits der Längsachse, d.h. der Drehachse R, und in lateraler Richtung zur Längsachse sich erstreckende Schultern 18 auf. Konkret ist jeder der Mischarme 5 mit einem jeweiligen ersten längsseitigen Ende mit einer der Schultern 18 fügetechnisch verbunden, insbesondere verschweißt.

Die Schultern 18 sind mit dem Antriebsschaft 3 einstückig ausgebildet, d.h. insbesondere, dass diese aus einem flachprofilierten Materialabschnitt, und beispielsweise mit dem Antriebsschaft 3 in einem gemeinsamen Herstellungsschritt hergestellt sein können.

Die Schultern 18 weisen im Falle des Ausführungsbeispiels der Figuren 1, 2, 7 und 8 an deren Schmalseiten, bzw. lateralen Stirnseiten, jeweils eine rechteckförmige Ausnehmung auf, in welche die ersten längsseitigen Enden 19 der Mischarme 5 eingreifen bzw. eintauchen. Jede der Ausnehmungen bildet eine parallel zur Längsachse verlaufende Anschlagfläche und eine senkrecht zur Längsachse verlaufende Anschlagfläche, an welche der jeweilige Mischarm 5 mit einem längsseitigen Fügeabschnitt 20 und mit einem stirnseitigen Fügeabschnitt 21 angeschlagen ist.

Durch Verwendung der Ausnehmungen, durch welche Mischarme 5 und Antriebsschaft 3 im Fügebereich 17 überlappend und entsprechend eines Winkelstoßes aneinander angeschlagen und miteinander verbunden werden können, ist es möglich, Antriebsschaft 3 und Durchmischungseinheit 4 mechanisch und fügetechnisch in stabiler Weise zu verbinden, insbesondere im Hinblick auf beim Betrieb des Mischrotors auftretende Axial- und Torsionskräfte.

Die Durchmischungseinheit 4 kann, wie in den Figuren des Ausführungsbeispiels gezeigt, ein Kopplungselement 22 umfassen, welches an einem zweiten längsseitigen Ende 23, bzw. im Bereich des zweiten längsseitigen Endes 23 der Mischarme 5 ausgebildet sein kann. Konkret kann das Kopplungselement 22 mit einander zugewandten Innenseiten der Mischarme 5 verbunden sein, und das Kopplungselement 22 kann ausgebildet sein, die zweiten längsseitigen Enden der Mischarme 5 mechanisch miteinander, insbesondere in einem definierten Abstand zueinander, zu verbinden.

Als eine, insbesondere, optionale Komponente kann das Kopplungselement 22, wie beispielhaft in den Figuren gezeigt, an einer vom Antriebsschaft 3 abgewandten Seite einen als Durchtrieb zum Antrieb einer nachgeschalteten Einheit, z.B. einer Pumpeneinheit, ausgebildeten Antriebsabschnitt 24 umfassen.

Die Mischwendel 6 ist im Beispiel der Figuren so ausgebildet und angeordnet, dass diese die Mischarme 5 und den Antriebsschaft 3 jeweils teilweise schraubenförmig umläuft, wobei eine Mittenachse der Mischwendel 6 mit der Längsachse des Antriebsschafts 3 im Wesentlichen zusammenfällt.

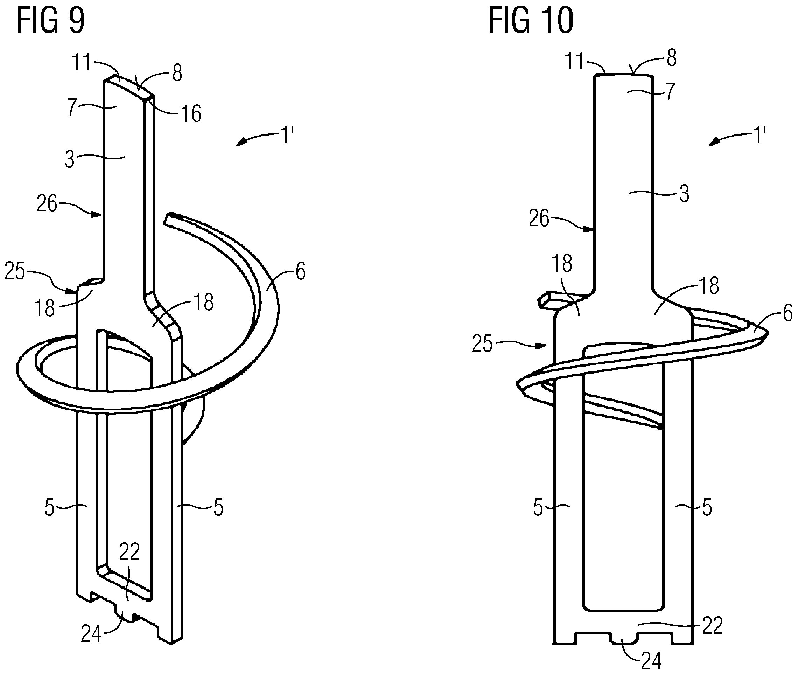

FIG. 9 zeigt eine perspektivische Darstellung eines Mischrotors 1' eines zweiten Ausführungsbeispiels. Der Mischrotor 1' des zweiten Ausführungsbeispiels umfasst einen aus Antriebsschaft 3, Schulterabschnitt 25 und zwei Mischarmen 5 gebildeten Grundkörper 26, mit einer am Grundkörper 26 angebrachten Mischwendel 6, welche entsprechend dem Ausführungsbeispiel nach FIG. 1 ausgebildet ist.

Der Grundkörper 26 des Mischrotors 1' des zweiten Ausführungsbeispiels ist als Ganzes in einstückiger Ausbildung aus einem flachprofilierten Material, insbesondere einem Flachprofil, gebildet.

Der einstückig ausgebildete Grundkörper 26, der den Antriebsschaft 3, den Schulterabschnitt 25 und die beiden Mischarme 5 als eine zusammenhängende, aus einem Stück gebildete Einheit umfasst, kann beispielsweise durch ein thermisches Trennverfahren aus einem Flachprofil bzw. einem Flacherzeugnis herausgeschnitten sein.

Bei der Ausgestaltung nach FIG. 9 bis 11 kann der Grundkörper 26 hergestellt werden, ohne dass stoffschlüssige Verbindungen erforderlich wären, was zur Vereinfachung des gesamten Herstellungsprozesses für den Mischrotor 1' führen kann.

Der Schulterabschnitt 25 ist an einem vom Antriebsschaftsegment 7 abgewandten Ende des Antriebsschafts 3 in Form einer flachprofilierten Verbreiterung mit beiderseitig der Längsachse, bzw. der Drehachse R, bezüglich der Längsachse radial vorspringenden Schultern 18 ausgebildet, was insbesondere aus der Vorderansicht des Mischrotors 1' des zweiten Ausführungsbeispiels in FIG. 10 zu sehen ist.

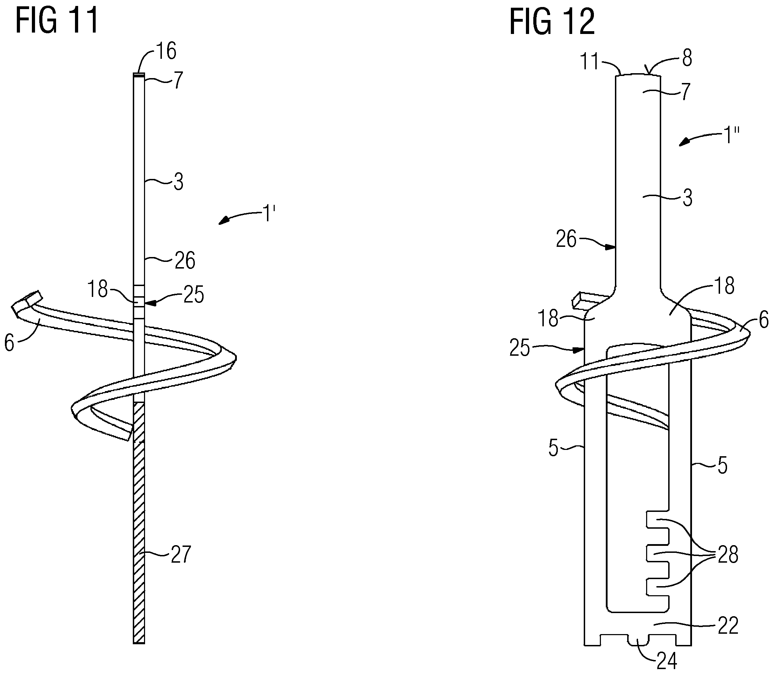

Beim zweiten Ausführungsbeispiel der FIG. 9 bis 11 weist der Grundkörper 26 über im Wesentlichen die gesamte Länge parallel zur Längsachse des Mischrotors 1' in Richtung der kurzen Seitenkante 16 gemessen eine im Wesentlichen konstante Dicke auf, was insbesondere aus der Seitenansicht des Mischrotors 1' des zweiten Ausführungsbeispiels in FIG. 11 zu sehen ist.

Zur mechanischen Stabilisierung der vom Antriebsschaft 3 abgewandten Enden der Mischarme 5 und/oder zur Bereitstellung eine Haltestruktur für einen wie oben bereits beschriebenen Antriebsabschnitt 24 kann zwischen den beiden Mischarmen 5 ein Verbindungssteg, korrespondierend zum Kopplungselement 22 des Ausführungsbeispiels der FIG. 1, vorhanden sein.

Der Verbindungssteg kann, wie im Ausführungsbeispiel nach FIG. 9 bis 11, einstückig, d.h. in einem Stück, mit dem Grundkörper 26, und entsprechend ebenfalls als flachprofilierter Materialabschnitt ausgebildet sein. Insbesondere kann der Grundkörper 26 des Mischrotors 1' als Ganzes aus einem Flacherzeugnis hergestellt werden, wodurch insbesondere Vorteile im Hinblick auf die Herstellung des Mischrotors 1' erreicht werden können.

FIG. 11 zeigt, wie bereits erwähnt, eine Seitenansicht des Mischrotors 1' des zweiten Ausführungsbeispiels, wobei an der in FIG. 8 sichtbaren Schmalseite des Mischarms 5 eine Schutzgas-Hartauftragsschweißung 27 aufgebracht ist, derart, dass ein Verschleiß in Form von mechanischem Abrieb beim Betrieb des Mischrotors 1' z.B. in einer Mischkammer, gegenüber der ungeschweißten Konfiguration, zumindest verringert werden kann.

FIG. 12 zeigt eine Vorderansicht eines Mischrotors 1" eines dritten Ausführungsbeispiels. Der Mischrotor 1" nach FIG. 12 unterscheidet sich vom Mischrotor 1' des zweiten Ausführungsbeispiels der FIG. 9 bis 11 dadurch, dass an einem der Mischarme 5 drei zusätzliche Mischzähne 28 vorhanden sind. Die Mischzähne 28 bilden eine Art Mischkamm, und springen von einer der Längsachse bzw. der Drehachse R des Mischrotors 1" zugewandten inneren Schmalseite des Mischarms 5, in der Ansicht nach FIG. 9 des Rechts gelegenen Mischarms 5, in Richtung der Drehachse R, bzw. in Richtung des weiteren Mischarms 5 vor.

Am zweiten Mischarm 5 sind im vorliegenden Beispiel keine Mischzähne 28, oder ähnliche bzw. andere zusätzliche Mischorgane ausgebildet. Die am zweiten Mischarm 5 vorhandenen zusätzlichen Mischzähne 28 bilden insoweit asymmetrisch ausgebildete zusätzliche Mischorgane, insbesondere zur verbesserten Durchmischung des zu mischenden Mischguts, beispielsweise einer, z.B. auf Trockenmörtel basierenden, Baustoffmischung.

Die Mischzähne 28 des Ausführungsbeispiels nach FIG. 9 sind in Richtung parallel zur Längsachse des Mischrotors 1" betrachtet äquidistant zueinander angeordnet, und weisen, ebenfalls in Richtung der Längsachse betrachtet, jeweils eine gleiche Breite auf. Andere Konfigurationen, insbesondere hinsichtlich Anzahl, Form, Anordnung, Geometrie und/oder Erstreckung, der zusätzlichen Mischorgane sind denkbar, und können beispielsweise in Abhängigkeit des jeweils beabsichtigten Mischzwecks und/oder der Eigenschaften des jeweiligen Mischguts gewählt bzw. angepasst werden.

Die Mischzähne 28 im Ausführungsbeispiel nach FIG. 12 weisen in radialer Richtung bezüglich der Längsachse A, bzw. der vorliegend damit zusammen fallenden Drehachse R, eine Länge auf, die kleiner ist als der Abstand der inneren Schmalseite des Mischarms 5 von der Drehachse R. Andere Konfigurationen, insbesondere Längen, sind denkbar.

Die etwa durch zusätzliche Mischorgane erzeugten, bzw. verursachten bereits diskutierten Pendelbewegungen oder Kippbewegungen des Antriebsschafts können mit der hierin vorgeschlagenen Konfiguration der Axiallagerfläche(n) 8 bzw. 9 ausgeglichen werden, so dass der Verschleiß an den beim Betrieb aufeinander abgestützten Axiallagerflächen verringert werden kann.

Im Ausführungsbeispiel nach FIG. 1 bis 11 können in Varianten ebenfalls zusätzliche (nicht gezeigte) Mischorgane vorhanden sein, die beispielsweise einstückig mit einem jeweiligen Mischarm 5 ausgebildet und/oder am jeweiligen Mischarm 5 durch eine z.B. stoffschlüssige Verbindung angebracht sein können.

Im Ausführungsbeispiel der FIG. 9 können der Grundkörper 26 einschließlich aller weiteren Komponenten, und insbesondere die gekrümmte Axiallagerfläche 8, zumindest in dessen Grundform, aus einem (einzigen) flachprofilierten Flacherzeugnis bzw. Halbzeug, in einstückiger Ausbildung, d.h. in Form eines einzigen zusammenhängenden Werkstücks, hergestellt werden, was insbesondere mit herstellungstechnischen Vorteilen verbunden sein kann.

Wie weiter oben bereits beschrieben, kann der in den Figuren gezeigte und mit Bezug zu den Figuren beschriebene Mischrotor bei einer Vorrichtung zur Herstellung von fließfähigen Baustoffmischungen, basierend auf Mörtel- oder Beton-basierten Gemischen, insbesondere Trockengemischen verwendet werden. Der Mischrotor kann dabei beispielsweise in einer Mischkammer positioniert bzw. montiert, und über ein wie beschrieben ausgebildetes Antriebsfutter mit einer außerhalb der Mischkammer gelegenen Antriebseinheit antriebstechnisch gekoppelt sein.

Aus FIG. 1 bis FIG. 12 lässt sich insbesondere auch ein mögliches Verfahren zur Herstellung des Mischrotors 1 ableiten, wobei ein entsprechendes Verfahren die Herstellung einer Axiallagerfläche 8 an einem axial-stirnseitigen Ende des Antriebsschafts 3 bzw. des Antriebsschaftsegments 7 umfassen kann.

Insgesamt zeigt sich aus der obigen Beschreibung, dass die hierin vorgeschlagene Lösung die Umsetzung eines neuen und vorteilhaften Mischrotors zur Mischung von Baustoffen und Baustoffgemischen ermöglicht. Insbesondere können etwaige Mischrotoren vergleichsweise kostengünstig und/oder mit vergleichsweise geringem Herstellungsaufwand hergestellt werden, wobei, insbesondere aufgrund der vorgesehenen gekrümmten Axiallagerflächen, gleichzeitig ein verschleißarmer Betrieb verbunden mit vergleichsweise hohen Standzeiten erreicht werden können.

### Bezugszeichenliste

- 1, 1', 1": Mischrotor
- 2: Antriebsfutter
- 3: Antriebsschaft
- 4: Durchmischungseinheit
- 5: Mischarm
- 6: Mischwendel
- 7: Antriebsschaftsegment
- 8: gekrümmte Axiallagerfläche
- 9: gekrümmte Gegen-Axiallagerfläche
- 10: Abrundung
- 11: lange Seitenkante
- 12: Vertiefung
- 13: Einführtrichter
- 14: Trichterwandung
- 15: Kopplungselemente
- 16: kurze Seitenkante
- 17: Fügebereich
- 18: Schulter
- 19: erstes längsseitiges Ende
- 20: längsseitiger Fügeabschnitt
- 21: stirnseitiger Fügeabschnitt
- 22: Kopplungselement
- 23: zweites längsseitiges Ende
- 24: Antriebsabschnitt
- 25: Schulterabschnitt
- 26: Grundkörper
- 27: Schutzgas-Hartauftragsschweißung
- 28: Mischzahn

- B: Breite
- E: Ende
- E1: erste Mittelebene
- E2: zweite Mittelebene
- G: Gesamtbreite
- L: Längsausdehnung
- R: Drehachse
- S: Spiel
- T: mittlere Tiefe
- W: Winkelbereich

## Patentansprüche

1. Mischeinheit (1, 2), umfassend:
- einen Mischrotor (1) zur Mischung fließfähiger Baustoffe, basierend insbesondere auf Mörtel- oder Betongemischen, und
- ein Antriebsfutter (2) zum rotatorischen Antrieb des Mischrotors (1) um eine Drehachse (R)
- wobei der Mischrotor (1) eine Durchmischungseinheit (4) und einen mit der Durchmischungseinheit (4) zum Zwecke der Übertragung einer Drehbewegung gekoppelten Antriebsschaft (3) umfasst,
- wobei der Antriebsschaft (3) an einem von der Durchmischungseinheit (4) abgewandten Ende ein zur Kopplung mit dem Antriebsfutter (2) ausgebildetes Antriebsschaftsegment (7) aufweist,
- wobei das Antriebsfutter (2) eine Antriebsschaftaufnahme (12) zur kraft- und/oder formschlüssigen Aufnahme des Antriebsschaftsegments (7) umfasst,
- wobei das Antriebsschaftsegment (7) eine axial-stirnseitig gelegene, zur Anlage an eine in Richtung der Drehachse (R) orientierte Gegen-Axiallagerfläche (9) des der Antriebsschaftaufnahme (12) ausgebildete, gekrümmte Axiallagerfläche (8) umfasst,
- **dadurch gekennzeichnet, dass**
- die Axiallagerfläche (8) derart eingerichtet ist, dass diese mit der Gegen-Axiallagerfläche (9), bei mechanischer Kopplung von Antriebsschaft (7) und Antriebsfutter (2) nach Art eines Axial-Gelenklagers zusammenwirkt, und
- das Antriebsfutter (2) derart ausgebildet ist, dass zwischen Antriebsschaftaufnahme (12) und Antriebsschaftsegment (7) ein bezüglich der Drehachse (R) gemessenes radiales Spiel (S) vorhanden ist, durch welches Pendelbewegungen innerhalb eines vorgegebenen Winkels ermöglicht werden.

2. Mischeinheit (1, 2) nach Anspruch 1, wobei die am axial-stirnseitigen Ende des Antriebsschaftsegments (7) ausgebildete Axiallagerfläche (8) eine, insbesondere konvexe und/oder konkave, eindimensionale Krümmung aufweist, oder wobei die Axiallagerfläche (8) eine, insbesondere konvexe und/oder konkave, zweidimensionale Krümmung aufweist, und/oder wobei die gekrümmte Axiallagerfläche (8) zumindest teilweise in Form der Oberfläche eines Zylindersegments, Kugelsegments, Kugelscheibensegments, Sphäroidsegments oder Sphäroidscheibensegments ausgebildet ist, und/oder wobei gekrümmte Axiallagerfläche (8) zumindest teilweise ballig gekrümmt ausgebildet ist.

3. Mischeinheit (1, 2) nach einem der Ansprüche 1 oder 2, wobei das Antriebsschaftsegment (7) einen axial stirnseitig gelegenen Gelenklagerkopf (7) umfasst, dessen Oberfläche die gekrümmte Axiallagerfläche (8) umfasst, und welcher zur Ausbildung des Axial-Gelenklagers (8, 9), eingerichtet und ausgebildet ist zur Anlage an eine am Antriebsfutter (2) ausgebildete Gelenklagerschale (9).

4. Mischeinheit (1, 2) nach einem der Ansprüche 1 bis 3, wobei zumindest das Antriebsschaftsegment (7) in Querschnitten senkrecht zur Längsachse (R) des Antriebsschafts (3) zumindest abschnittsweise eine polygonale Kontur aufweist.

5. Mischeinheit (1, 2) nach einem der Ansprüche 1 bis 4, wobei die Durchmischungseinheit (4) zumindest einen, bevorzugt zwei, sich vom Antriebsschaft (3), vorzugsweise parallel zur Drehachse (R) erstreckende Mischarme (5) umfasst, und optional zumindest eine an dem zumindest einen Mischarm (5) angebrachte, insbesondere helix- oder schraubenförmige, Mischwendel (6) umfasst.

6. Mischeinheit (1, 2) nach Anspruch 5, wobei zumindest einer der Mischarme (5) zumindest ein sich quer zur Längserstreckung des Mischarms (5) erstreckendes, zusätzliches Mischorgan (28), insbesondere in Form einer oder mehrerer Mischzacken (28), umfasst, und/oder wobei an dem zumindest einen Mischarm (5) und/oder an einem an dem zumindest einen Mischarm (5) angebrachten Kopplungsabschnitt (22), ein Durchtrieb (24) zur Übertragung einer Drehbewegung auf eine dem Mischrotor (1) nachgeschaltete Komponente, insbesondere eine Pumpe, vorhanden ist.

7. Mischeinheit (1, 2) nach einem der Ansprüche 1 bis 6, wobei zumindest ein das stirnseitige Ende (E) des Antriebsschafts (3) umfassender Schaftabschnitt (7), insbesondere des Antriebsschaftsegments (7), im Wesentlichen der gesamte Antriebsschaft, und/oder zumindest ein Mischarm (5) der Durchmischungseinheit (4) als Flachprofil gebildet ist und/oder wobei der Antriebsschaft (3) und zumindest ein Mischarm (5) der Durchmischungseinheit (4) einstückig ausgebildet sind, und/oder wobei der Antriebsschaft (3) und zumindest ein Mischarm (5) der Durchmischungseinheit (4) durch eine stoffschlüssige Verbindung miteinander verbunden sind.

8. Mischeinheit (1, 2) nach einem der Ansprüche 1 bis 7, wobei die Antriebsschaftaufnahme (12) eine sich in Richtung der Drehachse (R) erstreckende buchsenartige Vertiefung (12) umfasst, mit einer in Richtung der Drehachse (R) orientierten Bodenfläche (9) welche die gekrümmte Gegen-Axiallagerfläche (9) umfasst.

9. Mischeinheit (1, 2) nach einem der Ansprüche 1 bis 8, wobei die Gegen-Axiallagerfläche (9) ein- oder zweidimensional, insbesondere konkav oder und/oder konvex, gekrümmt ist.

10. Mischeinheit (1, 2) nach Anspruch 8, wobei die Vertiefung (12) einen polygonalen, insbesondere rechteckigen Querschnitt aufweist, insbesondere zur Aufnahme eines in Flachprofil ausgebildeten Antriebsschafts (3) oder Antriebsschaftsegments (7).

11. Mischeinheit (1, 2) nach einem der Ansprüche 1 bis 10, umfassend des Weiteren einen Einführtrichter (13, 14) mit einer sich in Richtung der Drehachse (R) erstreckenden, und optional rotationssymmetrisch zur Drehachse (R) ausgebildeten, Trichterwandung (14), welche, wenn abhängig von Anspruch 8, sich konisch verjüngend zur Vertiefung (12) hin erstreckt und/oder unmittelbar anschließend an einer Eintrittsöffnung der Vertiefung (12) ausgebildet ist.

12. Mischeinheit (1, 2) nach einem der Ansprüche 1 bis 11, wobei das Antriebsfutter (2), insbesondere die Antriebsschaftaufnahme (12), form- und/oder kraftschlüssig mit dem Antriebsschaftsegment (7) des Mischrotors (1) gekoppelt ist, derart, dass die Axiallagerfläche (8) und die Gegen-Axiallagerfläche (9) in einem Kontaktbereich (B) miteinander in Kontakt sind.

13. Mischeinheit (1, 2) nach Anspruch 12, wobei zumindest innerhalb des Kontaktbereichs (B) die Beträge der Krümmungsradien der Axiallagerfläche (8) und der Gegen-Axiallagerfläche (9) im Wesentlichen gleich sind, und wobei optional eine Kontaktfläche des Kontaktbereichs (B) im Wesentlichen dem Querschnitt des Antriebsschafts (3) entspricht.

14. Mischvorrichtung zur Mischung fließfähiger Baustoffe, basierend insbesondere auf Mörtel- oder Betongemischen, umfassend eine Mischeinheit (1, 2) nach einem der Ansprüche 1 bis 13, und ferner eine Antriebseinheit zum rotatorischen Antrieb, welcher zum Zwecke der Übertragung einer Drehbewegung mit dem Antriebsfutter (2) dem Mischrotor (1) bzw. der Mischeinheit (8, 9) gekoppelt bzw. koppelbar ist.

## Claims

1. Mixing unit (1, 2), comprising:
- a mixing rotor (1) for mixing flowable building materials, based in particular on mortar or concrete mixtures, and
- a drive chuck (2) for rotatably driving the mixing rotor (1) about an axis of rotation (R)
- wherein the mixing rotor (1) comprises a intermixing unit (4) and a drive shaft (3) coupled to the intermixing unit (4) for the purpose of transmitting a rotational movement,
- wherein the drive shaft (3) has a drive shaft segment (7) for coupling with the drive chuck (2) at one end facing away from the intermixing unit (4),
- wherein the drive chuck (2) comprises a drive shaft receptacle (12) for force- and/or form-fitting reception of the drive shaft segment (7),
- wherein the drive shaft segment (7) comprises a curved axial bearing surface (8) that is located on the axial face side, the axial bearing surface (8) for joining to an axial counter-bearing surface (9) of the drive shaft receptacle (12) oriented in the direction of the axis of rotation (R),
**characterized in that**
- the axial bearing surface (8) is arranged such that it cooperates with the axial counter-bearing surface (9) in the manner of an axial articulation bearing with the drive shaft (7) and drive chuck (2) being mechanically coupled, and
- the drive chuck (2) is designed such that a radial play (S), measured with respect to the rotational axis (R), is present between the drive shaft receptacle (12) and the drive shaft segment (7), enabling pendulum movements within a predetermined angle.

2. Mixing unit (1, 2) according to claim 1,
wherein the axial bearing surface (8) formed at the axial face side of the drive shaft segment (7) has a, in particular convex and/or concave, one-dimensional curvature, or wherein the thrust bearing surface (8) has a, in particular convex and/or concave, two-dimensional curvature, and/or wherein the curved axial bearing surface (8) is, at least partially, in the form of the surface of a cylinder segment, sphere segment, spherical disc segment, spheroidal segment or spheroidal disc segment, and/or wherein the curved axial bearing surface (8) is, at least partially, spherically curved.

3. Mixing unit (1, 2) according to any of claims 1 or 2, wherein the drive shaft segment (7) comprises an axial joint bearing head (7) that is located on the axial face side, whose surface comprises the curved axial bearing surface (8), and which is, for the formation of the axial articulation bearing (8, 9), set up and designed for abutting against a spherical bearing shell (9) formed on the drive chuck (2).

4. Mixing unit (1, 2) according to any of claims 1 to 3, wherein at least the drive shaft segment (7) at least partially comprises a polygonal contour in cross-sections perpendicular to the longitudinal axis (R) of the drive shaft (3).

5. Mixing unit (1, 2) according to any of claims 1 to 4, wherein the intermixing unit (4) comprises at least one, preferably two, mixing arms (5) extending from the drive shaft (3), preferably parallel to the axis of rotation (R), and optionally comprises at least one, in particular helical or screw-like, mixing helix (6) attached to the at least one mixing arm (5).

6. Mixing unit (1, 2) according to claim 5, wherein at least one of the mixing arms (5) comprises at least one additional mixing element (28) extending transversal to the longitudinal extent of the mixing arm (5), the at least one additional mixing element in particular in the form of one or more mixing spikes (28), and/or wherein on the at least one mixing arm (5) and/or on a coupling portion (22) attached to the at least one mixing arm (5), a through-drive (24) is present, the through-drive (24) for transmitting a rotational movement to a component, in particular a pump, that is downstream of the mixing rotor (1).

7. Mixing unit (1, 2) according to any of claims 1 to 6, wherein at least one shaft portion (7) that comprises the end face (E) of the drive shaft (3), in particular of the drive shaft segment (7), substantially the entire drive shaft, and/or at least one mixing arm (5) of the intermixing unit (4) is formed as a flat profile and/or wherein the drive shaft (3) and at least one mixing arm (5) of the intermixing unit (4) are integrally formed, and/or wherein the drive shaft (3) and at least one mixing arm (5) of the intermixing unit (4) are connected to one another by a substance-to-substance bond.

8. Mixing unit (1, 2) according to any of claims 1 to 7, wherein the drive shaft receptacle (12) comprises a sleeve-like recess (12) extending in the direction of the axis of rotation (R), with a bottom surface (9) that is oriented in the direction of the axis of rotation (R), and includes the curved axial counter bearing surface (9).

9. Mixing unit (1, 2) according to any of claims 1 to 8, wherein the axial counter bearing surface (9) is curved in one or two dimensions, in particular concavely and/or convexly.

10. Mixing unit (1, 2) according to claim 8, wherein the recess (12) has a polygonal, in particular rectangular cross-section, in particular for receiving a drive shaft (3) or drive shaft segment (7) formed in a flat profile.

11. Mixing unit (1, 2) according to any of claims 1 to 10, further comprising an insertion funnel (13, 14) with a funnel wall (14) extending in the direction of the axis of rotation (R) and optionally formed rotationally symmetrical to the axis of rotation (R), which, if dependent on claim 8, extends conically tapered to the recess (12) and/or is formed immediately adjacent to an inlet opening of the recess (12).

12. Mixing unit (1, 2) according to any of claims 1 to 11, wherein the drive chuck (2), in particular the drive shaft receptacle (12), is coupled by form- and/or force-fitting to the drive shaft segment (7) of the mixing rotor (1), such that the axial bearing surface (8) and the axial counter-bearing surface (9) are in contact with each other in a contact region (B).

13. Mixing unit (1, 2) according to claim 12, wherein, at least within the contact region (B), the absolute values of the radii of curvature of the axial bearing surface (8) and the axial counter- bearing surface (9) are substantially equal, and wherein, optionally, a contact surface of the contact area (B) substantially corresponds to the cross section of the drive shaft (3).

14. Mixing device for mixing flowable building materials, based in particular on mortar or concrete mixtures, comprising a mixing unit (1, 2) according to any of claims 1 to 13, and, further, a driving unit for rotational driving, which is coupled or can be coupled to the drive chuck (2), to the mixing rotor (1), or to the mixing unit (8, 9) for the purpose of transmitting a rotary movement.

## Revendications

1. Unité de mélange (1, 2) comprenant:
- un rotor de mélange (1) pour mélanger des matériaux de construction fluable, en particulier à base des mélanges de mortier ou de béton, et
- un mandrin d'entraînement (2) pour entraîner en rotation le rotor de mélange (1) autour d'un axe de rotation (R)
- où le rotor de mélange (1) comprend une unité de mixage (4) et un arbre d'entraînement (3) couplé à l'unité de mixage (4) afin de transmettre un mouvement de rotation,
- où l'arbre d'entraînement (3) présente un segment d'arbre d'entraînement (7) situé à une des extrémités opposé à l'unité de mixage (4) afin d'être couplée avec le mandrin d'entraînement (2),
- où le mandrin d'entraînement (2) comprend un réceptacle d'arbre d'entraînement (12) pour recervoir par liaison de force ou par adhérence le segment d'arbre d'entraînement (7),
- où le segment d'arbre d'entraînement (7) comprend une surface de palier axial courbée (8) située axial frontal pour la mise en contact avec une contre-surface de palier axial (9) du réceptacle d'arbre d'entraînement (12) orientée dans la direction de l'axe de rotation (R),
- **caractérisé en ce que**
- la surface de palier axial (8) est agencée de telle manière que celle-là coopère avec la contre-surface de palier axial (9), pendant un couplage mécanique de l'arbre d'entraînement (7) et du mandrin d'entraînement (2), à la manière d'un palier articulant axial, et
- le mandrin d'entraînement (2) est formé de telle manière qu'il existe un jeu radial (S) entre le réceptacle d'arbre d'entraînement (12) et le segment d'arbre d'entraînement (7) mesuré relatif à l'axe de rotation (R), ce qui permet des oscillations dans les limites d'un angle prédéterminé.

2. Unité de mélange (1, 2) selon la revendication 1, où la surface de palier axial (8) formée à l'extrémité axiale frontale du segment d'arbre d'entraînement (7) présente une courbure, en particulier convexe et/ou concave, unidimensionnelle, ou où la surface de palier axial (8) présente une courbure, en particulier convexe et/ou concave, bidimensionnelle et/ou où la surface de palier axial courbée (8) est formée, au moins partiellement, sous la forme de la surface d'un segment de cylindre, d'un segment de sphère, d'un segment de disque sphérique, d'un segment sphéroïde ou d'un segment de disque sphéroïde et/ou où la surface de palier axial courbée (8) est, au moins partiellement, incurvée de manière bombée.

3. Unité de mélange (1, 2) selon l'une des revendications 1 ou 2, où le segment d'arbre d'entraînement (7) comprend une tête de palier sphérique (7) axiale frontale dont la surface comprend la surface de palier axial courbée (8), et qui est destinée à la formation du palier articulant axial (8, 9) et conçu pour la mise en contact avec une coquille de palier articulant axial (9) formée au mandrin d'entraînement (2).

4. Unité de mélange (1, 2) selon l'une des revendications 1 à 3, où au moins le segment d'arbre d'entraînement (7) présente, au moins partiellement, un contour polygonal en coupes transversales perpendiculaires à l'axe longitudinal (R) de l'arbre d'entraînement (3).

5. Unité de mélange (1, 2) selon l'une des revendications 1 à 4, où l'unité de mixage (4) comprends au moins un, de préférence deux, bras de mélange (5) qui s'étendent de l'arbre d'entraînement (3), de préférence parallèle à l'axe de rotation (R), et, optionellement, au moins un hélice mélangeuse (6), en particulier en forme de vis ou hélicoïdal, fixé au au moins un bras de mélange (5).

6. Unité de mélange (1, 2) selon la revendication 5, où au moins un des bras de mélange (5) comprends au moins un élément de mélange supplémentaire (28) s'étendent transversal à l'étendue longitudinale du bras de mélange (5), en particulier sous la forme d'un ou de plusieurs dentelures de mélange (28) et/ou où un entraînement traversant (24) pour transmettre un mouvement de rotation au rotor de mélange (1), en particulier une pompe, est présent sur le au moins un bras de mélange (5) et/ou sur une partie de couplage (22) fixée au au moins un bras de mélange (5).

7. Unité de mélange (1, 2) selon l'une des revendications 1 à 6, où au moins une partie de l'arbre d'entraînement (7) contenant l'extrémité frontale (E) de l'arbre d'entraînement (3), en particulier du segment d'arbre d'entraînement (7), essentiellement l'arbre d'entraînement complet, et/ou au moins un bras de mélange (5) de l'unité de mixage (4) est formé sous la forme d'un profil plat et/ou où l'arbre d'entraînement (3) et au moins un bras de mélange (5) de l'unité de mixage (4) sont formés d'une seule pièce, et/ou où l'arbre d'entraînement (3) et au moins un bras de mélange (5) de l'unité de mixage (4) sont reliés par une liaison inter-substance.

8. Unité de mélange (1, 2) selon l'une des revendications 1 à 7, où le réceptacle de l'arbre d'entraînement (12) contient une cavité en forme de douille (12) s'étendant dans la direction de l'axe de rotation (R), avec une surface de plancher (9) orientée dans la direction de l'axe de rotation (R) qui comprend la contre-surface de palier axial courbée (9).

9. Unité de mélange (1, 2) selon l'une des revendications 1 à 8, où la contre-surface de palier axial (9) est incurvée unidimensionnelle ou bidimensionnelle, en particulier concave et/ou convexe.

10. Unité de mélange (1, 2) selon la revendication 8, où la cavité (12) présente une section transversale polygonale, en particulier rectangulaire, en particulier pour recevoir un arbre d'entraînement (3) à profil plat ou un segment d'arbre d'entraînement (7).

11. Unité de mélange (1, 2) selon l'une des revendications 1 à 10, comprenant de plus un entonnoir d'insertion (13, 14) avec une paroi de l'entonnoir (14) s'étendant dans la direction de l'axe de rotation (R) et, optionellement, symétrique en rotation par rapport à l'axe de rotation (R), qui, lorsqu'elle dépend de la revendication 8, se rétrécit de manière conique vers la cavité (12) et/ou est formée immédiatement à côté d'une ouverture d'entrée de la cavité (12).

12. Unité de mélange (1, 2) selon l'une des revendications 1 à 11, où le mandrin d'entraînement (2), en particulier le réceptacle d'arbre d'entraînement (12), est couplé en complémentarité de forme et/ou de force au segment d'arbre d'entraînement (7) du rotor de mélange (1) de telle manière que la surface de palier axial (8) et la contre-surface de palier axial (9) sont en contact dans une zone de contact (B).

13. Unité de mélange (1, 2) selon la revendication 12, où au moins dans la zone de contact (B), les valeurs absolues des rayons de courbure de la surface de palier axial (8) et de la contre-surface de palier axial (9) sont essentiellement égaux, et où, optionellement, une surface de contact de la zone de contact (B) correspond essentiellement à la section transversale de l'arbre d'entraînement (3).

14. Dispositif de mélange pour mélanger des matériaux de construction fluides, en particulier à base des mélanges de mortier ou de béton, comprenant une unité de mélange (1, 2) selon l'une des revendications 1 à 13, et en outre une unité d'entraînement pour l'entraînement en rotation, qui est couplée ou plutôt coupable avec le mandrin d'entraînement (2), le rotor de mélange (1) ou plutôt l'unité de mélange (8, 9) pour la transmission d'un mouvement de rotation.
